# EUROPEAN PATENT SPECIFICATION

(11) **EP 3 534 041 B1**
(45) Date of publication and mention of the grant of the patent: **04.11.2020**
(21) Application number: 19159017.3
(22) Date of filing: 25.02.2019
(51) Int. Cl.: F16H 57/035, F01P 11/10, F01P 5/06, B62M 7/12, F16H 57/04

(54) **POWER UNIT**
TRIEBWERK
BLOC D'ALIMENTATION

(30) Priority: 28.02.2018 JP 2018035143
(43) Date of publication of application: 04.09.2019
(73) Proprietor: Honda Motor Co., Ltd., Tokyo 107-8556 (JP)
(72) Inventor: Tomioka, Yusuke, Saitama, 351-0193 (JP); Nishida, Kenji, Saitama, 351-0193 (JP); Tanaka, Hiroyuki, Saitama, 351-0193 (JP)
(74) Representative: Kiwit, Benedikt

(56) References cited:
- EP-A1- 2 014 890
- EP-A1- 2 014 891
- EP-A2- 2 551 551
- JP-A- 2009 191 969
- JP-A- 2013 204 505
- JP-B2- 4 897 905
- KR-B1- 101 087 004
- US-A1- 2006 027 192

## Description

### [TECHNICAL FIELD]

The present invention relates to a power unit (unit swing engine) having a cooling fan which is fixed to a crankshaft and generates an air flow in response to a rotation of the crankshaft.

### [BACKGROUND ART]

JP 2013 - 204 505 A discloses a power unit including an internal combustion engine (engine body) having a crankcase that rotatably supports a crankshaft around a rotation axis, a water cooling system mounted on the internal combustion engine and having a radiator connected to a water jacket of a cylinder head, and a belt type continuously variable transmission that transmits a power of the crankshaft to a driven shaft at a stepless transmission ratio.

### [SUMMARY OF THE INVENTION]

### [PROBLEM TO BE SOLVED BY THE INVENTION]

The power unit disclosed in JP 2013 - 204 505 A includes one cooling fan that is fixed to one end of the crankshaft and takes in an outside air in response to the rotation of the crankshaft to generate an air flow toward a belt of a belt type continuously variable transmission, and another cooling fan that is fixed to the other end of the crankshaft and takes in the outside air in response to the rotation of the crankshaft to generate an air flow passing through a radiator. Therefore, since the respective cooling fans are disposed on both ends of the crankshaft, the power unit is upsized in an axial direction of the crankshaft.

The present invention has been made in view of the above circumstances, and an object of the present invention is to provide a power unit which is downsized in an axial direction of a crankshaft.

### [MEANS TO SOLVE THE PROBLEMS]

In order to achieve the object, according to present invention, there is provided a power unit according to claim 1.

Preferably, the second guide path includes an air guide passage that is formed in the crankcase, extends from the transmission chamber in the axial direction of the crankshaft while being separated from the crank chamber, and opens toward the radiator across the crank chamber.

Preferably, the power unit further comprises: a first air guide wall that is disposed radially outward of the cooling fan, faces an orbital surface drawn at an outer end of a blade of the cooling fan, which is rotating, at a regular interval in a radial direction of the cooling fan, and partitions the transmission chamber; and a second air guide wall that is disposed radially outward of the cooling fan and moves away from the orbital surface as the second air guide wall is displaced in a rotational direction of the cooling fan, and partitions a space continuous from the air guide passage.

Preferably, the radiator is mounted on the crankcase, and forms a generator chamber that accommodates a generator connected to one end of the crankshaft, and that is connected to the air guide passage.

Preferably, the generator chamber is provided with an air guide that guides the air flow flowing from the air guide passage to a radiator core of the radiator.

Preferably, the power unit further comprises: an air cleaner that is coupled to the transmission case and suctions and purifies an outside air; and an intake system component that is disposed along an outer wall of the air guide passage and connects the air cleaner to a cylinder head forming the water jacket.

### [EFFECTS OF THE INVENTION]

According to the present invention, since the air flow of the cooling fan is fed toward the transmission chamber accommodating the belt of the belt-type continuously variable transmission and passes through the radiator which exchanges coolant water with the engine body, there is no need to attach the cooling fan for the transmission chamber and the cooling fan for the radiator on the crankshaft, individually, and the power unit can be downsized in the axial direction of the crankshaft.

With the optional features of claim 2, the air flow of the cooling fan can be efficiently supplied from the air guide passage to the radiator.

With the optional features of claim 3, since the first air guide wall faces the orbital surface at regular intervals, no direction component occurs in a circumferential direction in the air flow emitted from the cooling fan in the centrifugal direction, and the air flow collides with the first air guide wall and flows into the transmission chamber as it is. Meanwhile, the second air guide path moves away from the orbital surface as the second air guide path is displaced in the rotational direction of the cooling fan. Therefore, a direction component occurs in the rotational direction in the air flow emitted from the cooling fan in the centrifugal direction, and the air flow collides with the second air guide wall and is guided in the rotational direction and flows into the air guide passage. In this way, the air flow generated by the cooling fan can be distributed to the air flow sent into the transmission chamber and the airflow passing through the radiator.

With the optional features of claim 4, since the radiator closes one side of the generator chamber, in the second guide path, the air flow passing through the radiator flows into the generator chamber through the air guide passage and can cool the generator.

With the optional features of claim 5, since the air flow from the cooling fan is guided toward the radiator core through the air guide, the air flow surely passes through the radiator, and the cooling efficiency improves.

With the optional features of claim 6, since the air guide passage is disposed in a dead space provided between the outer wall of the crankcase and the intake system component, an increase in size of the power unit can be avoided regardless of the addition of the air guide passage.

### [BRIEF DESCRIPTION OF THE DRAWINGS]

[FIG. 1] FIG. 1 is a side view schematically showing a scooter type two-wheeled motor vehicle according to an embodiment of a saddle riding vehicle.
[FIG. 2] FIG. 2 is a horizontal cross-sectional view of a power unit taken along a line 2-2 in FIG. 1.
[FIG. 3] FIG. 3 is an enlarged side view of an engine body schematically showing a configuration of a water cooling system including a water pump and a radiator.
[FIG. 4] FIG. 4 is an enlarged cross-sectional view taken along a line 4-4 in FIG. 2.
[FIG. 5] FIG. 5 is a cross-sectional view taken along a line 5-5 in FIG. 4, schematically showing a cooling fan and a crankcase.
[FIG. 6] FIG. 6 is a cross-sectional view taken along a line 6-6 in FIG. 4, schematically showing an outer surface of a duct cover.

### [MODE FOR CARRYING OUT THE INVENTION]

Hereinafter, embodiments of the present invention will be described with reference to the accompanying drawings. In the following description, a front and rear, up and down, and left and right directions are directions as viewed from an occupant riding on a two-wheeled motor vehicle.

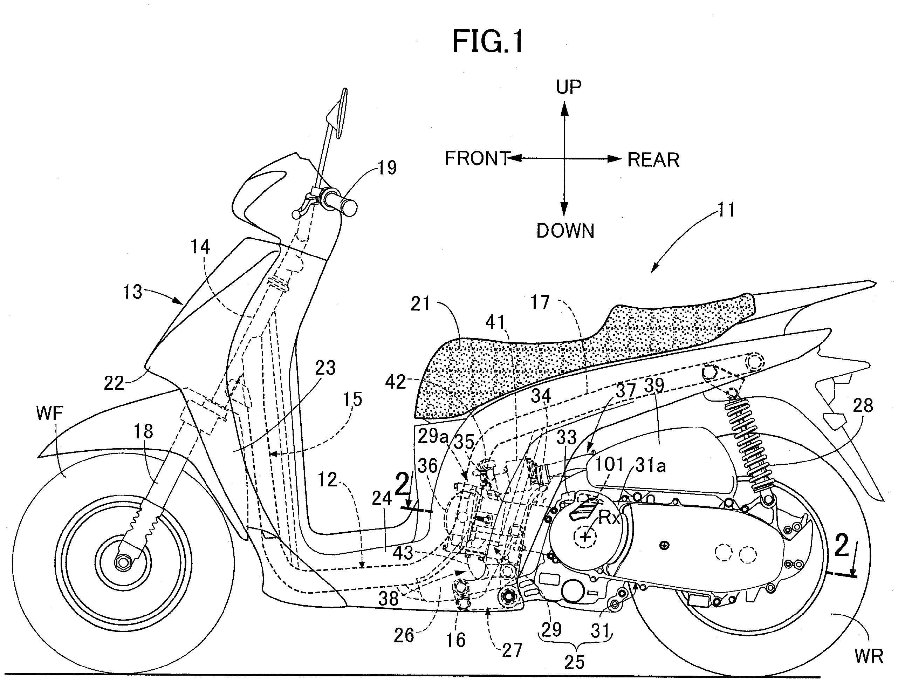

FIG. 1 schematically shows a scooter type two-wheeled motor vehicle of a saddle riding vehicle according to an embodiment. The two-wheeled motor vehicle 11 includes a body frame 12 and a body cover 13 mounted on the body frame 12. The body frame 12 includes a head pipe 14, a main frame 15, a cross pipe 16, and a pair of right and left rear frames 17. The head pipe 14 configures a front end of the body frame 12. The main frame 15 is connected to the head pipe 14 at the front end of the body frame 12. The cross pipe 16 is connected to a rear portion of the main frame 15 and extends in a vehicle width direction. The pair of right and left rear frames 17 has respective front end portions connected to both end portions of the cross pipe 16 and extends in a vehicle longitudinal direction. A front fork 18 and a rod-like steering handlebar 19 are steerably supported by the head pipe 14. The front fork 18 supports a front wheel WF so as to be rotatable around an axle.

An occupant's seat 21 is mounted on the body cover 13 above the rear frame 17. The body cover 13 includes a front cover 22, a leg shield 23, and a step floor 24. The front cover 22 covers the head pipe 14 from the front, the leg shield 23 is continuous from the front cover 22, and the step floor 24 is continuous from a lower end of the leg shield 23 and disposed above the main frame 15 between the occupant's seat 21 and the front wheel WF.

A unit swing type power unit 25 is disposed in a space below the rear frame 17. The power unit 25 is connected to a bracket 26 through a link 27 so as to be swingable in a vertical direction. The bracket 26 is coupled to a front end of the rear frame 17. A rear wheel WR is rotatably supported around the axle of a horizontal shaft at the rear end of the power unit 25. A reaction unit 28 is disposed between the rear frame 17 and the power unit 25 at a position away from the link 27 and the bracket 26.
The power unit 25 includes a water-cooled single cylinder engine 29, and a transmission device 31. The transmission device 31 is connected to the engine 29 and the rear wheel WR and transmits an output of the engine 29 to the rear wheel WR. A transmission case 31a of the transmission device 31 is coupled to an engine body 29a of the engine 29.

The engine body 29a of the engine 29 includes a crankcase 33, a cylinder block 34, a cylinder head 35, and a head cover 36. The crankcase 33 supports a crankshaft (to be described later) so as to be rotatable around a rotation axis Rx extending in parallel to the axle of the rear wheel WR. The cylinder block 34 is coupled to the crankcase 33. The cylinder head 35 is coupled to the cylinder block 34, and the head cover 36 is coupled to the cylinder head 35. An intake device 37 and an exhaust device 38 are connected to the cylinder head 35. The intake device 37 includes an air cleaner 39, and a throttle body 41 as an intake system component. The air cleaner 39 is supported by the transmission case 31a and suctions and clarifies the outside air, and the throttle body 41 connects the air cleaner 39 to the cylinder head 35. A fuel injection valve 42 is attached to an upper side wall of the cylinder head 35. The exhaust device 38 includes an exhaust pipe 43 and an exhaust muffler. The exhaust pipe 43 extends rearward from a lower side wall of the cylinder head 35 through a space below the engine body 29a, and the exhaust muffler (not shown) is connected to a downstream end of the exhaust pipe 43 and coupled to the crankcase 33.

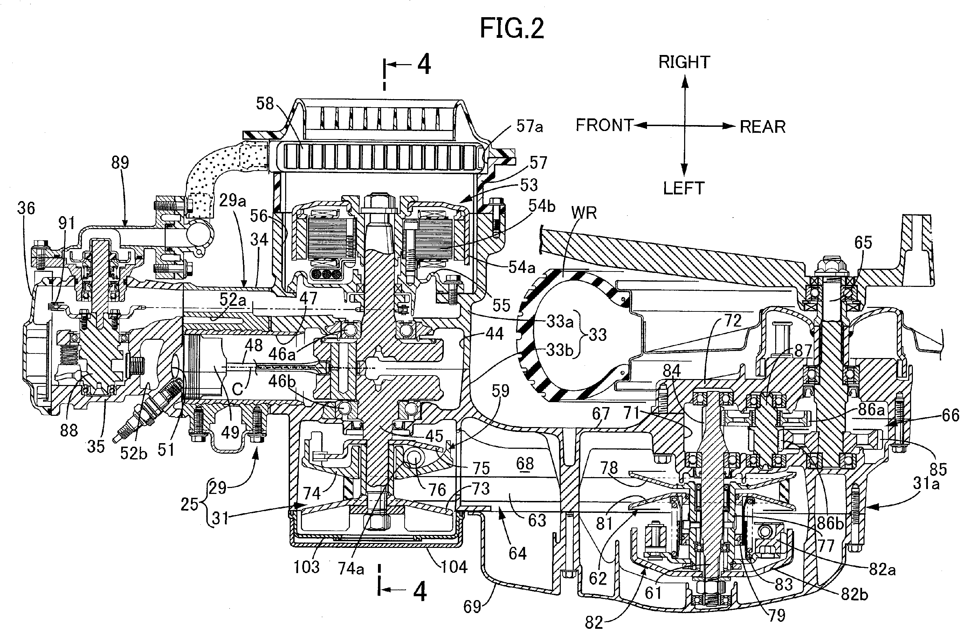

As shown in FIG. 2, the crankcase 33 is divided into a first case half 33a and a second case half 33b. The first case half 33a and the second case half 33b cooperate with each other to define a crank chamber 44. A crank of the crankshaft 45 is accommodated in the crank chamber 44. A bearing 46a for rotatably supporting the crankshaft 45 is assembled in the first case half 33a. A bearing 46b that rotatably supports the crankshaft 45 is assembled in the second case half 33b.

A cylinder bore 47 is defined in the cylinder block 34. A piston 49 connected to the crank of the crankshaft 45 is slidably fitted into the cylinder bore 47 by a connecting rod 48 along a cylinder axis C. A linear reciprocating motion of the piston 49 is transformed into a rotational motion of the crankshaft 45. The cylinder axis C is inclined slightly upwardly toward the front from the horizontal direction. A combustion chamber 51 is defined between the piston 49 and the cylinder head 35. An air-fuel mixture is introduced into the combustion chamber 51 through the intake device 37. An exhaust gas in the combustion chamber 51 is discharged through the exhaust device 38.

Water jackets 52a and 52b for guiding a flow of coolant water around the combustion chamber 51 are formed in the cylinder block 34 and the cylinder head 35. The water jacket 52a of the cylinder block 34 is defined around the cylinder bore 47 along a mating face with the cylinder head 35. The water jacket 52b of the cylinder head 35 extends continuously from the water jacket 52a of the cylinder block 34 along a ceiling wall of the combustion chamber 51.

An alternating current generator (ACG) 53 is connected to one end of the crankshaft 45. The alternating current generator 53 includes a cylindrical rotor 54a and a stator 54b. The cylindrical rotor 54a is fixed to one end of the crankshaft 45 projecting from a first side (an outer surface of the first case half 33a) of the crankcase 33, and the stator 54b is surrounded by the rotor 54a and disposed around the crankshaft 45. The stator 54b is configured by multiple coils wound individually on stator cores, and is fixed to a support plate 55 fastened to the first case half 33a. The alternating current generator 53 generates an electric power in response to a relative rotation of the rotor 54a and the stator 54b.

A generator cover 57 forming a generator chamber 56 for accommodating the alternating current generator 53 is coupled to the first case half 33a with an outer surface of the first case half 33a. An air introduction port 57a is defined in the generator cover 57 at a position facing one end of the crankshaft 45. A radiator 58 is incorporated in the air introduction port 57a. In this way, the radiator 58 is mounted on the crankcase 33 and forms one surface of the generator chamber 56.

The transmission device 31 includes an electronically controlled belt-type continuously variable transmission (hereinafter referred to as "transmission") 64 and a reduction gear mechanism 66. The transmission 64 is accommodated in the transmission case 31a, includes a V-belt 63 wound around a driving pulley 59 and a driven pulley 62, and steplessly changes a rotational power transmitted from the crankshaft 45. The driving pulley 59 is attached to the crankshaft 45 projecting from the second side (the outer surface of the second case half 33b) of the crankcase 33 opposite to the first side. The driven pulley 62 is attached to a driven shaft 61. The reduction gear mechanism 66 is housed in the transmission case 31a, reduces the rotational power of the transmission 64, and transmits the reduced rotational power to an axle 65 of the rear wheel WR.

The transmission case 31a includes a case body 67, a case cover 69, and a gear cover 72. The case body 67 is continuous from the second case half 33b of the crankcase 33, and the case cover 69 is fastened to the case body 67 and defines the transmission chamber 68 accommodating the transmission 64 in cooperation with the case body 67. The gear cover 72 is fastened to the case body 67 and defines a gear chamber 71 in cooperation with the case body 67. The reduction gear mechanism 66 is accommodated in the gear chamber 71.

The driving pulley 59 includes a fixed pulley half 73 and a movable pulley half 74. The fixed pulley half 73 is coaxially fixed to the crankshaft 45 and has a conical inward surface. The movable pulley half 74 is coaxially fixed to the crankshaft 45 so as to be movably in the axial direction of the crankshaft 45, and has a conical inward surface facing the inward surface of the fixed pulley half 73. The V-belt 63 is wound between the inward surface of the fixed pulley half 73 and the inward surface of the movable pulley half 74. The movable pulley half 74 is disposed between the second case half 33b of the crankcase 33 and the fixed pulley half 73. A weight holding plate 75 is opposed to an outward surface of the movable pulley half 74, and is axially immovably fixed to the crankshaft 45. A centrifugal weight 76 is sandwiched between a cam surface 74a of the movable pulley half 74 and the weight holding plate 75. The cam surface 74a moves away from the fixed pulley half 73 as the cam surface 74a moves farther in a centrifugal direction from the rotation axis Rx of the crankshaft 45. A centrifugal force is generated on the centrifugal weight 76 as the crankshaft 45 rotates. The centrifugal weight 76 is displaced in the centrifugal direction due to the centrifugal force. The movable pulley half 74 is driven toward the fixed pulley half 73 as the centrifugal weight 76 is displaced in the centrifugal direction while rollingly contacting the cam surface 74a. Thus, the movable pulley half 74 moves in the axial direction toward the fixed pulley half 73 in response to the rotation of the crankshaft 45, and a winding radius of the V-belt 63 changes.

The driven pulley 62 includes an inner cylinder 77, a fixed pulley half 78, an outer cylinder 79, and a movable pulley half 81. The inner cylinder 77 has a cylindrical shape coaxial with the driven shaft 61 and is coaxially mounted on the driven shaft 61. The fixed pulley half 78 is fixed coaxially to the inner cylinder 77. The outer cylinder 79 has a cylindrical shape coaxial with the driven shaft 61 and is coaxially mounted on the inner cylinder 77. The movable pulley half 81 is fixed to the outer cylinder 79 coaxial with the outer cylinder 79 and has an inward surface facing an inward surface of the fixed pulley half 78. The V-belt 63 is wound around an inward surface of the fixed pulley half 78 and an inward surface of the movable pulley half 81. The inner cylinder 77 is relatively rotatably supported to the driven shaft 61. The outer cylinder 79 is supported to the inner cylinder 77 so as to be relatively rotatable and axially relatively displaceable. The movable pulley half 81 comes closer to the fixed pulley half 78 and moves away from the fixed pulley half 78 in accordance with an axial relative displacement between the outer cylinder 79 and the inner cylinder 77.

A centrifugal clutch 82 is mounted on the driven shaft 61. The centrifugal clutch 82 includes a clutch plate 82a fixed to the inner cylinder 77. A helical spring 83 is disposed between the clutch plate 82a and the movable pulley half 81. The helical spring 83 exerts an elastic force for pressing the movable pulley half 81 against the fixed pulley half 78. When the winding radius of the V-belt 63 is increased by the driving pulley 59, the movable pulley half 81 moves away from the fixed pulley half 78 against the elastic force of the helical spring 83 in the driven pulley 62, and the winding radius of the V-belt 63 decreases.

The centrifugal clutch 82 includes an outer plate 82b which is fixed to the driven shaft 61. The outer plate 82b faces the clutch plate 82a. When the clutch plate 82a rotates, the outer plate 82b is coupled to the clutch plate 82a by the action of a centrifugal force. In this way, the rotation of the driven pulley 62 is transmitted to the driven shaft 61. When the engine rotational speed exceeds a set rotational speed, the centrifugal clutch 82 establishes a power transmission state.

The reduction gear mechanism 66 includes a drive gear 84, a final gear 85, and idle gears 86a and 86b. The drive gear 84 is fixed to the driven shaft 61 protruding into the gear chamber 71. The final gear 85 is fixed to the axle 65 of the rear wheel WR, and the idle gears 86a and 86b are disposed between the drive gear 84 and the final gear 85. The idle gears 86a and 86b are fixed to a common intermediate shaft 87. The drive gear 84 meshes with an idle gear 85a and the final gear 85 meshes with an idle gear 85b. In this way, the rotation of the driven shaft 61 is decelerated and transmitted to the axle 65 of the rear wheel WR.

A water pump 89 is mounted on the engine body 29a. The water pump 89 is connected to a camshaft 88 for driving an intake valve and an exhaust valve, and discharges the coolant water in conjunction with the rotation of the camshaft 88. A cam chain 91 is wound around a sprocket of the camshaft 88 and a sprocket of the crankshaft 45 for the purpose of rotationally driving the camshaft 88.

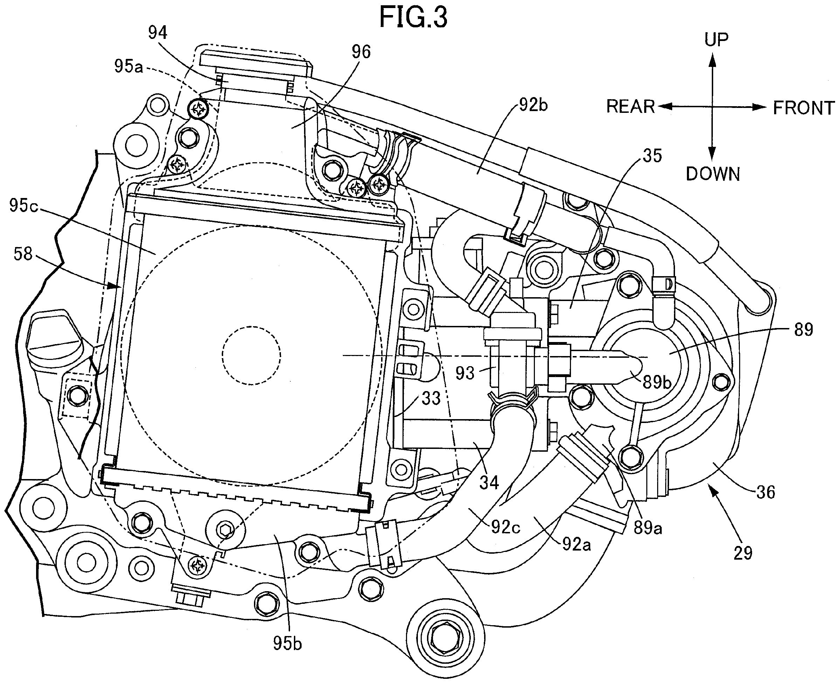

The water pump 89 circulates the coolant water in a closed path passing through the radiator 58. As shown in FIG. 3, the path is configured by a first pipe 92a, a second pipe 92b, and a third pipe 92c. The first pipe 92a connects the water jacket 52a of the cylinder block 34 to a discharge port 89a of the water pump 89. The second pipe 92b connects an introducing port of the radiator 58 to the water jacket 52b of the cylinder head 35, and the third pipe 92c connects a thermostat 93 to a discharge port of the radiator 58. The thermostat 93 is connected to a suction pipe 89b of the water pump 89.

The coolant water discharged from the water pump 89 is introduced from the first pipe 92a into the water jacket 52a of the cylinder block 34. The coolant water flows through the water jacket 52a of the cylinder block 34 and the water jacket 52b of the cylinder head 35, and cools the engine body 29a. The coolant water discharged from the cylinder head 35 flows into the radiator 58 through the second pipe 92b. The coolant water cooled by the radiator 58 flows into the thermostat 93 from the third pipe 92c, and returns to the water pump 89. In this way, the engine body 29a is cooled.

The radiator 58 includes an upper tank 95a, a lower tank 95b, a radiator core 95c, and a tank cover 96. The upper tank 95a has a filler neck 94 extending upward, the lower tank 95b is disposed below the upper tank 95a, and the radiator core 95c is disposed between the upper tank 95a and the lower tank 95b. The tank cover 96 covers the upper tank 95a from the outside in the width direction. The second pipe 92b is connected to the upper tank 95a and the third pipe 92c is connected to the lower tank 95b. The radiator core 95c is formed by a pipe that is connected to the upper tank 95a and the lower tank 95b so as to allow the coolant water to pass from the upper tank 95a to the lower tank 95b and radiating fins coupled to the pipe. The coolant water introduced into the upper tank 95a is cooled by the radiator core 95c, and flows into the lower tank 95b.

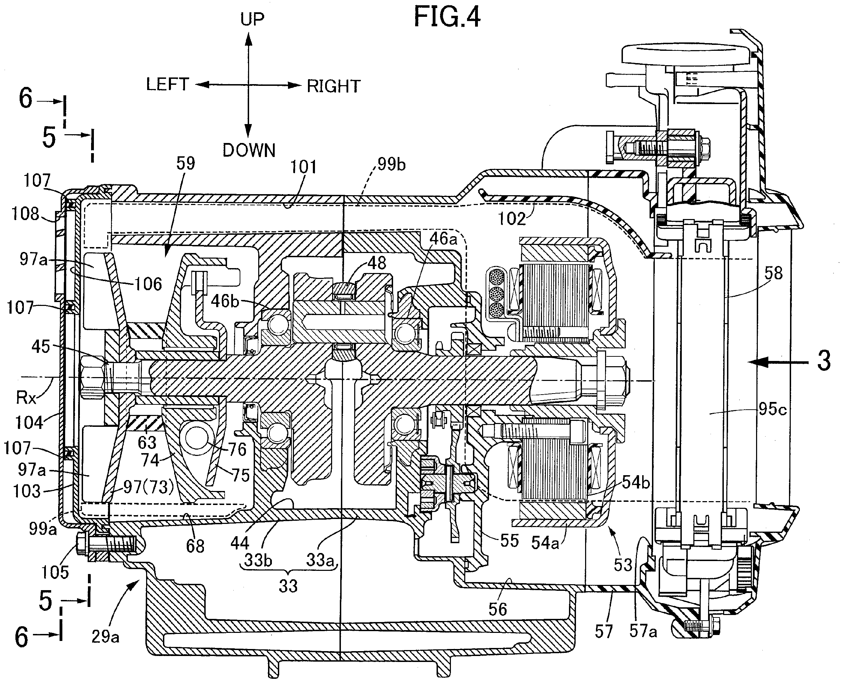

As shown in FIG. 4, a cooling fan 97 is incorporated in the crankcase 33. The cooling fan 97 is fixed to the crankshaft 45 coaxially with the crankshaft 45 and generates an air flow in response to the rotation of the crankshaft 45. In this example, the cooling fan 97 is integrally formed on an outer surface of the fixed pulley half 73 of the driving pulley 59. The cooling fan 97 includes multiple blades 97a extending in the centrifugal direction from the rotation axis Rx of the crankshaft 45. The cooling fan 97 configures a so-called centrifugal fan. The cooling fan 97 suctions the air along the rotation axis Rx of the crankshaft 45 and generates the air flow in the centrifugal direction.

The engine body 29a is provided with a first guide path 99a and a second guide path 99b. The first guide path 99a guides the air flow of the cooling fan 97 toward the V-belt 63 in the transmission chamber 68, and the second guide path 99b guides the airflow of the cooling fan 97 passing through the radiator 58. The second guide path 99b includes an air guide passage 101 that is provided in the crankcase 33, extends from the transmission chamber 68 in the axial direction of the crankshaft 45 while being separated from the crank chamber 44, and opens toward the radiator 58 across the crank chamber 44. A part of the air flow generated by the cooling fan 97 flows into the air guide passage 101 and flows into the generator chamber 56 through the air guide passage 101. The air flow cools the alternating current generator 53 in the generator chamber 56, passes through the radiator core 95c of the radiator 58, and is discharged to the outside of the generator chamber 56.

The generator chamber 56 is internally provided with an air guide 102 for guiding the air flow flowing from the air guide passage 101 to the radiator core 95c of the radiator 58. The air guide 102 is supported by the generator cover 57. The air guide 102 spreads from an upstream end facing an outer wall of the air guide passage 101 around the rotation axis Rx toward the air introduction port 57a of the generator cover 57 while facing the outer circumferential surface of the rotor 54a and is connected to the generator cover 57 at the downstream end.

A duct cover 103 and an outer cover 104 are attached to the crankcase 33. The duct cover 103 faces the cooling fan 97 to close the transmission chamber 68 and the outer cover 104 covers an outer surface of the duct cover 103 to define a space between the duct cover 103 and the outer cover 104. The duct cover 103 and the outer cover 104 are fastened together and fixed to the crankcase 33 by, for example, a bolt 105. A protrusion 107 is formed on the outer surface of the duct cover 103. The protrusion 107 protrudes from the outer surface of the duct cover 103, contacts an inner surface of the outer cover 104, and partitions an air passage (duct) 106 between the duct cover 103 and the outer cover 104. The outer cover 104 has a suction port 108 facing the passage 106 formed therein.

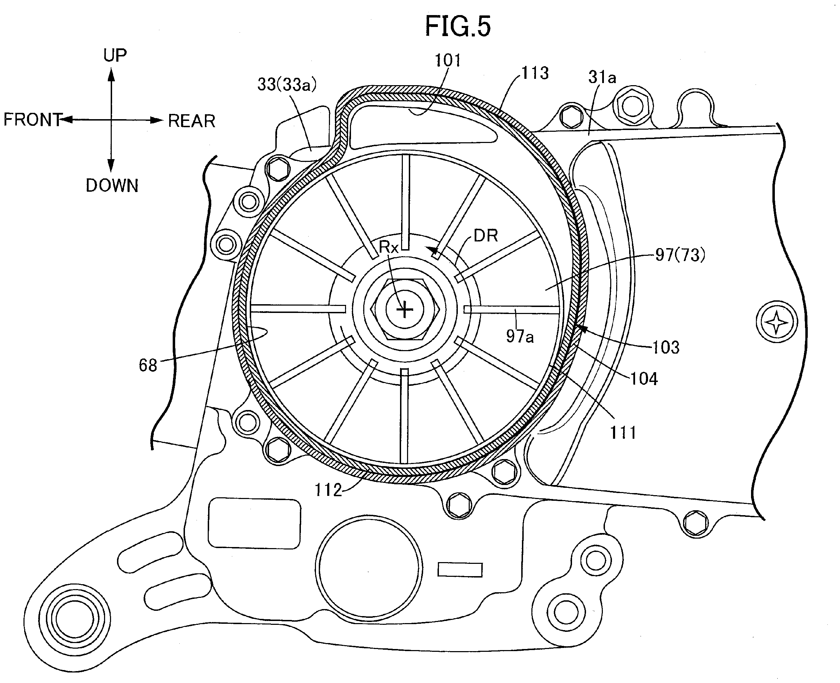

As shown in FIG. 5, the duct cover 103 includes a first air guide wall 112 and a second air guide wall 113. The first air guide wall 112 is disposed radially outwardly of the cooling fan 97, and faces an orbital surface 111 drawn with an outer end of the blade 97a of the rotating cooling fan 97 at a regular interval in the radial direction of the cooling fan 97, and defines the transmission chamber 68. The second air guide wall 113 is disposed radially outward of the cooling fan 97 and moves away from the orbital surface 111 as the second air guide wall 113 is displaced in the rotational direction of the cooling fan 97, and partitions a space continuous from the air guide passage 101. The air flow spreading in the centrifugal direction by the cooling fan 97 is guided in a direction of a bus bar of the second case half 33b along the first guide path 99a by the action of the first air guide wall 112 and flows into the transmission chamber 68. The air flow is also guided to the air guide passage 101 of the second guide path 99b by the action of the second air guide wall 113. In this way, the duct cover 103 distributes the air flow centrifugally generated around the rotation axis Rx of the crankshaft 45 over the entire circumference by the cooling fan 97 to the first guide path 99a and the second guide path 99b. As shown in FIG. 1, a connecting tube extending from the throttle body 41 and the air cleaner 39 to the throttle body 41 is disposed above the air guide passage 101 along the outer wall of the air guide passage 101.

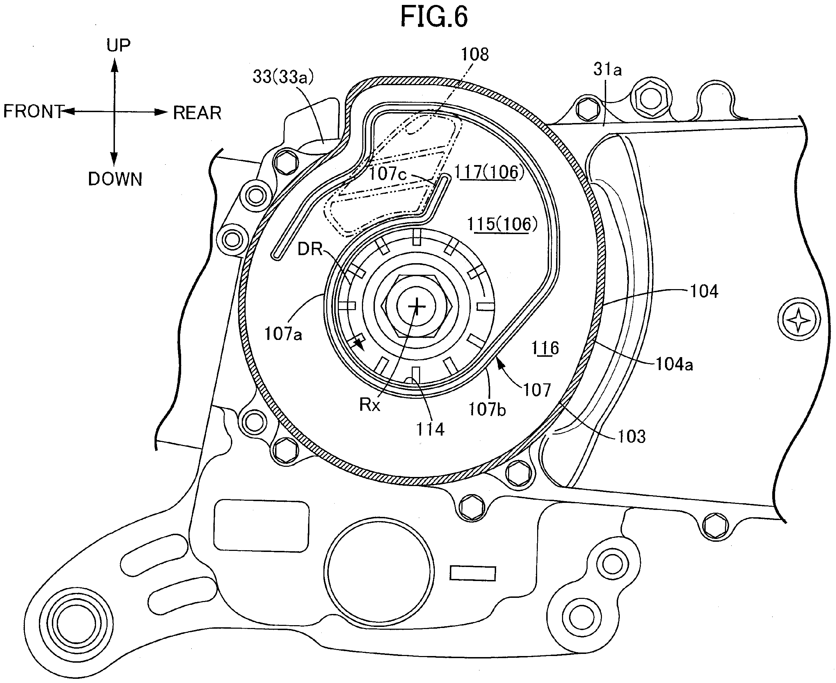

As shown in FIG. 6, the duct cover 103 has a circular opening 114 coaxially provided in the crankshaft 45 at a position facing one end of the crankshaft 45. The protrusion 107 includes a first region 107a, a second region 107b, and a third region 107c. The first region 107a surrounds the opening 114 along a contour of the opening 114 while defining an introduction path 115 from the uppermost end in the direction of gravity to the upstream side in a rotational direction DR of the cooling fan 97. The second region 107b extends from the lowermost end of the first region 107a toward an outer edge of the duct cover 103 while being displaced downstream in the rotational direction DR of the cooling fan 97, and defines a separation path 116 reaching downstream of the suction port 108 in the rotational direction DR with a peripheral wall 104a of the outer cover 104. The third region 107c is located upstream of the suction port 108 in the rotational direction DR, and defines a flow path 117 with the second region 107b while extending from the uppermost end of the first region 107a toward the second region 107b. The suction port 108 is opened in a space sandwiched between the first region 107a and the second region 107b on the downstream side of the third region 107c in the rotational direction DR. When the cooling fan 97 rotates around the rotation axis Rx, the outside air flows from the suction port 108 to the passage 106 between the projection 107 of the first region 107a and the projection 107 of the second region 107b, and passes through the introduction path 115 from the opening 114 into the transmission chamber 68. An object falling by gravity is guided downward through the protrusion 107 of the first region 107a from the suction port 108 and prevented from entering the opening 114. The protrusion 107 of the third region 107c prevents the movement of the object toward the opening 114 along the air flow.

Next, the operation of the present embodiment will be described. When the piston 49 linearly reciprocates in the engine body 29a of the power unit 25, the crankshaft 45 rotates about the rotation axis R. The driving pulley 59 of the transmission 64 rotates in response to the rotation of the crankshaft 45, and the rotation of the driving pulley 59 is transmitted to the driven pulley 62 by the V-belt 63. The rotation of the driven pulley 62 is transmitted to the axle 65 through the reduction gear mechanism 66 to drive the rear wheel WR. A temperature of the V-belt 63 wound around the driving pulley 59 and the driven pulley 62 increases due to the rotation of the driving pulley 59 and the driven pulley 62.

Since the cooling fan 97 rotates in response to the rotation of the crankshaft 45, the outside air suctioned through the suction port 108 is introduced from the first guide path 99a into the transmission chamber 68. In the transmission chamber 68, the cooling air cools the V-belt 63. In this way, a temperature rise of the transmission 64 is reduced.

During the operation of the engine body 29a, the water pump 89 operates in response to the rotation of the crankshaft 45. The coolant water circulates in the path. The coolant water passes through the water jackets 52a and 52b and takes away a heat energy of the cylinder block 34 and the cylinder head 35 around the combustion chamber 51. The temperature of the coolant water rises. A high temperature coolant water passes through the radiator core 95c, a heat is exchanged in the radiator core 95c, and the heat is discharged from the coolant water.

At that time, the cooling air generated by the cooling fan 97 is introduced into the generator chamber 56 from the second guide path 99b (through the air guide passage 101) and passes through the radiator 58. In this manner, the cooling air is fed toward the transmission chamber 68 accommodating the V-belt 63 of the transmission 64 through the first guide path 99a provided in the engine body 29a, and the cooling air guided through the second guide path 99b provided in the engine body 29a passes through the radiator 58. As a result, there is no need to attach the cooling fan for the transmission chamber 68 and the cooling fan for the radiator 58 to the crankshaft 45, individually, and the power unit 25 is reduced in sized in the axial direction of the crankshaft 45. In particular, in the generator chamber 56, the cooling air introduced from the air guide passage 101 is guided by the air guide 102 toward the radiator core 95c, so that the cooling air reliably passes through the radiator core 95c, and the cooling efficiency is improved.

In this example, the second guide path 99b includes the air guide passage 101 that is formed in the crankcase 33 and extends from the transmission chamber 68 in the axial direction of the crankshaft 45 while being separated from the crank chamber 44, and opens toward the radiator 58 across the crank chamber 44, the cooling air is efficiently supplied from the air guide passage 101 to the radiator 58.

Similarly, during the operation of the engine body 29a, the alternating current generator 53 operates in response to the rotation of the crankshaft 45. When the magnetism of the rotor 54a is relatively displaced within a magnetic field of the stator 54b, the alternating current generator 53 generates an electric power. The temperature of the alternating current generator 53 rises in accordance with the electric power generated by the alternating current generator 53. At this time, the radiator 58 is mounted on the crankcase 33, and forms the generator chamber 56 that accommodates the alternating current generator 53 connected to one end of the crankshaft 45, and that is connected to the air guide passage 101, and the radiator 58 closes one side of the generator chamber 56. As a result, in the second guide path 99b, the cooling air passing through the radiator 58 flows from the air guide passage 101 to the generator chamber 56 and cools the alternating current generator 53.

In the present embodiment, the duct cover 103 that closes the transmission chamber 68 at the position facing one end of the crankshaft 45 includes the first air guide wall 112 and the second air guide wall 113. The first air guide wall 112 is disposed radially outward of the cooling fan 97, and faces the orbital surface 111 drawn by the outer edge of the blade 97a of the rotating cooling fan 97 at a regular interval in the radial direction of the cooling fan 97 and defines the transmission chamber 68. The second air guide wall 113 is disposed radially outward of the cooling fan 97, moves away from the orbital surface 111 as the second air guide wall 113 is displaced in the rotational direction DR of the cooling fan 97, and defines the space continuous from the air guide passage 101. Since the first air guide wall 112 faces the orbital surface 111 at the regular interval, no directional component occurs in the circumferential direction in the air flow emitted from the cooling fan 97 in the centrifugal direction, and the air flow collides with the first air guide wall 112 and flows into the transmission chamber 68 as it is. Meanwhile, the second air guide wall 113 moves away from the orbital surface 111 as the second air guide wall, 15 113 is displaced in the rotational direction DR of the cooling fan 97. Therefore, the directional component is generated in the rotational direction in the air flow emitted from the cooling fan 97 in the centrifugal direction, and the air flow collides with the second air guide wall 113 and is guided in the rotational direction DR, and flows into the air guide passage 101. In this way, the air flow generated in the cooling fan 97 is distributed to the air flow to be fed into the transmission chamber 68 and the air flow to pass through the radiator 58.

In the power unit 25 according to the present embodiment, the throttle body 41 is disposed along the outer wall of the air guide passage 101 in front of the air cleaner 39 coupled to the transmission case 31a, so that the air guide passage 101 is disposed in a dead space defined between the outer wall of the crankcase 33 and the throttle body 41 and an increase in size of the power unit 25 is avoided regardless of the addition of the air guide passage 101.

In the embodiment described above, although the air guide passage 101 forming the second guide path 99b is provided in the crankcase 33, the air guide passage 101 may be provided outside the crankcase 33 by the outer surface of the crankcase 33 and a duct member made of resin attached to the crankcase 33 from the outside.

### [DESCRIPTION OF REFERENCE NUMERALS AND SYMBOLS]

- 25...: Power unit
- 29a...: Engine body
- 31a...: Transmission case
- 33...: Crankcase
- 35...: Cylinder head
- 39...: Air cleaner
- 41...: Intake system component (throttle body)
- 44...: Crank chamber
- 45...: Crankshaft
- 51...: Combustion chamber
- 52a...: Water jacket (of cylinder block)
- 52b...: Water jacket (of cylinder head)
- 53...: Generator (alternating current generator)
- 56...: Generator chamber
- 58...: Radiator
- 59...: Driving pulley
- 61...: Driven shaft
- 62...: Driven pulley
- 63...: V-belt
- 64...: Belt type continuously variable transmission
- 68...: Transmission chamber
- 92a...: Pipe (first pipe)
- 92b...: Pipe (second pipe)
- 92c...: Pipe (third pipe)
- 95c...: Radiator core
- 97...: Cooling fan
- 97a...: Blade
- 99a...: First guide path
- 99b...: Second guide path
- 101...: Air guide passage
- 102...: Air guide
- 111...: Orbital surface
- 112...: First air guide wall
- 113...: Second air guide wall
- DR...: Rotational direction (of cooling fan)
- Rx...: Rotation axis (of crankshaft)

## Claims

1. A power unit comprising:
an engine body (29a) that includes a crankcase (33) that supports a crankshaft (45) rotatably around a rotation axis (Rx), and a water jacket (52a, 52b) that guides a flow of coolant water around a combustion chamber (51);
a radiator (58) that is disposed at a position facing one end of the crankshaft (45) protruding from a first side of the crankcase (33), and that is connected to the water jacket (52a, 52b) by a pipe (92a, 92b, 92c);
a belt type continuously variable transmission (64) that includes a driving pulley (59) attached to the crankshaft (45) projecting from a second side of the crankcase (33) opposite to the first side, and a belt (63) wound on a driven pulley (62) attached to a driven shaft (61);
a transmission case (31a) that is connected to the crankcase (33) and forms a transmission chamber (68) accommodating the belt (63); and
a cooling fan (97) that is fixed to the crankshaft (45) and generates an air flow in response to rotation of the crankshaft (45),
**characterized in that**
as said cooling fan (97), a single cooling fan (97) is provided and fixed to one end of the crankshaft (45), and
the engine body (29a) is provided with a first guide path (99a) that guides the air flow of the cooling fan (97) toward the belt (63) in the transmission chamber (68) and a second guide path (99b) that guides the air flow of the cooling fan (97) which passes through the radiator (58).

2. The power unit according to claim 1, wherein the second guide path (99b) includes an air guide passage (101) that is formed in the crankcase (33), extends from the transmission chamber (68) in the axial direction of the crankshaft (45) while being separated from the crank chamber (44), and opens toward the radiator (58) across the crank chamber (44).

3. The power unit according to claim 2, further comprising:
a first air guide wall (112) that is disposed radially outward of the cooling fan (97), faces an orbital surface (111) drawn at an outer end of a blade (97a) of the cooling fan (97), which is rotating, at a regular interval in a radial direction of the cooling fan (97), and partitions the transmission chamber (68); and
a second air guide wall (113) that is disposed radially outward of the cooling fan (97) and moves away from the orbital surface (111) as the second air guide wall (113) is displaced in a rotational direction (DR) of the cooling fan (97), and partitions a space continuous from the air guide passage (101).

4. The power unit according to claim 2 or 3, wherein the radiator (58) is mounted on the crankcase (33), and forms a generator chamber (56) that accommodates a generator (53) connected to one end of the crankshaft (45), and that is connected to the air guide passage (101).

5. The power unit according to claim 4, wherein the generator chamber (56) is provided with an air guide (102) that guides the air flow flowing from the air guide passage (101) to a radiator core (95c) of the radiator (58).

6. The power unit according to any one of claims 1 to 5, further comprising:
an air cleaner (39) that is coupled to the transmission case (31a) and suctions and purifies an outside air; and
an intake system component (41) that is disposed along an outer wall of the air guide passage (101) and connects the air cleaner (39) to a cylinder head (35) forming the water jacket (52b).

## Patentansprüche

1. Antriebseinheit, die aufweist:
einen Motorkörper (29a), der ein Kurbelwellengehäuse (33), das eine Kurbelwelle (45) um eine Rotationsachse (Rx) rotierbar hält, und einen Wassermantel (52a, 52b), der einen Strom von Kühlwasser um eine Verbrennungskammer (51) führt, aufweist;
einen Kühler (58), der an einer Position angeordnet ist, die einem Ende der Kurbelwelle (45) zugewandt ist, die von einer ersten Seite des Kurbelwellengehäuses (33) hervorsteht, und der mit dem Wassermantel (52a, 52b) durch ein Rohr (92a, 92b, 92c) verbunden ist;
ein stufenloses Getriebe (64) des Riementyps, das eine Antriebscheibe (59) aufweist, die an der Kurbelwelle (45) angebracht ist, die von einer zweiten Seite des Kurbelwellengehäuses (33) gegenüberliegend der ersten Seite hervorsteht, und einen Riemen (63), der um eine Antriebscheibe (62) gewickelt ist, die an einer Antriebswelle (61) angebracht ist;
ein Getriebegehäuse (31a), das mit dem Kurbelwellengehäuses (33) verbunden ist und eine Getriebekammer (68) bildet, die den Riemen (63) aufnimmt; und
einen Ventilator (97), der an der Kurbelwelle (45) befestigt ist und einen Luftstrom in Reaktion auf die Rotation der Kurbelwelle (45) erzeugt,
**dadurch gekennzeichnet, dass**
als Ventilator (97) ein einzelner Ventilator (97) vorgesehen ist und an einem Ende der Kurbelwelle (45) befestigt ist, und
der Motorkörper (21a) mit einem ersten Führungspfad (99a) vorgesehen ist, der den Luftstrom des Ventilators (97) in Richtung des Riemens (63) in der Getriebekammer (68) führt und einen zweiten Führungspfad (99b), der den durch den Kühler (58) hindurchgehenden Luftstrom des Ventilators (97) führt.

2. Antriebseinheit nach Anspruch 1, wobei der zweite Führungspfad (99b) einen Luftführungskanal (101) aufweist, der im Kurbelwellengehäuse (33) ausgebildet ist, von der Getriebekammer (68) in der axialen Richtung der Kurbelwelle (45) verläuft, während er von der Kurbelwellenkammer (44) getrennt ist und sich zum Kühler (58) über die Kurbelwellenkammer (44) öffnet.

3. Antriebseinheit nach Anspruch 2, die weiterhin aufweist:
eine erste Luftführungswand (112), die radial außerhalb des Ventilators (97) angeordnet ist, einer Umlauffläche (111) zugewandt ist, die an einem äußeren Ende einer Schaufel (97a) des Ventilators (97), der rotiert, in einem regelmäßigen Intervall in einer radialen Richtung des Ventilators (97) verläuft, und die Getriebekammer (68) unterteilt; und
eine zweite Führungswand (113), die radial außerhalb des Ventilators (97) angeordnet ist und sich von der Umlauffläche (111) wegbewegt, wenn die zweite Luftführungswand (113) in einer Rotationsrichtung (DR) des Ventilators versetzt wird, und einen Raum fortlaufend von dem Luftführungskanal (101) unterteilt.

4. Antriebseinheit nach Anspruch 2 oder 3, wobei der Kühler (58) am Kurbelwellengehäuse (33) angebracht ist und eine Generatorkammer (56) bildet, die einen Generator (53) aufnimmt, der mit einem Ende der Kurbelwelle (45) verbunden ist und die mit dem Luftführungskanal (101) verbunden ist.

5. Antriebseinheit nach Anspruch 4, wobei die Generatorkammer (56) mit einer Luftführung (102) vorgesehen ist, die den Luftstrom führt, der von dem Luftführungskanal (101) zu einem Kühlerkern (95c) des Kühlers (58) fließt.

6. Antriebseinheit nach einem der Ansprüche 1 bis 5, die weiterhin aufweist:
einen Luftfilter (39), der mit dem Getriebegehäuse (31a) verbunden ist und Außenluft ansaugt und reinigt; und
eine Einlasssystemkomponente (41), die entlang einer Außenwand des Luftführungskanals (101) angeordnet ist und den Luftfilter (39) mit einem Zylinderkopf (35) verbindet, der den Wassermantel (52b) bildet.

## Revendications

1. Bloc-moteur comprenant :
un corps de moteur (29a) qui comporte un carter de vilebrequin (33) qui supporte un vilebrequin (45) en rotation autour d'un axe de rotation (Rx), et une chemise d'eau (52a, 52b) qui guide un écoulement d'eau de refroidissement autour d'une chambre de combustion (51) ;
un radiateur (58) qui est disposé à une position en regard d'une extrémité du vilebrequin (45) faisant saillie depuis un premier côté du carter de vilebrequin (33), et qui est raccordé à la chemise d'eau (52a, 52b) par un tuyau (92a, 92b, 92c) ;
une transmission à variation continue de type à courroie (64) qui comporte une poulie d'entraînement (59) attachée au vilebrequin (45) dépassant d'un deuxième côté du carter de vilebrequin (33) opposé au premier côté, et une courroie (63) enroulée sur une poulie menée (62) attachée à un arbre mené (61) ;
un carter de transmission (31a) qui est raccordé au carter de vilebrequin (33) et forme une chambre de transmission (68) logeant la courroie (63) ; et
un ventilateur de refroidissement (97) qui est fixé au vilebrequin (45) et génère un écoulement d'air en réponse à une rotation du vilebrequin (45),
**caractérisé en ce que**
en tant que dit ventilateur de refroidissement (97), un seul ventilateur de refroidissement (97) est fourni et fixé à une extrémité du vilebrequin (45), et
le corps de moteur (29a) est pourvu d'un premier chemin de guidage (99a) qui guide l'écoulement d'air du ventilateur de refroidissement (97) vers la courroie (63) dans la chambre de transmission (68) et d'un deuxième chemin de guidage (99b) qui guide l'écoulement d'air du ventilateur de refroidissement (97) qui traverse le radiateur (58).

2. Bloc-moteur selon la revendication 1, dans lequel le deuxième chemin de guidage (99b) comporte un passage de guidage d'air (101) qui est formé dans le carter de vilebrequin (33), s'étend depuis la chambre de transmission (68) dans la direction axiale du vilebrequin (45) tout en étant séparé de la chambre de vilebrequin (44), et s'ouvre vers le radiateur (58) à travers la chambre de vilebrequin (44).

3. Bloc-moteur selon la revendication 2, comprenant en outre :
une première paroi de guidage d'air (112) qui est disposée radialement à l'extérieur du ventilateur de refroidissement (97), est en regard d'une surface orbitale (111) dessinée au niveau d'une extrémité externe d'une pale (97a) du ventilateur de refroidissement (97), qui est en rotation, à un intervalle régulier dans une direction radiale du ventilateur de refroidissement (97), et divise la chambre de transmission (68) ; et
une deuxième paroi de guidage d'air (113) qui est disposée radialement à l'extérieur du ventilateur de refroidissement (97) et s'éloigne de la surface orbitale (111) à mesure que la seconde paroi de guidage d'air (113) est déplacée dans une direction de rotation (DR) du ventilateur de refroidissement (97), et divise un espace continu depuis le passage de guidage d'air (101).

4. Bloc-moteur selon la revendication 2 ou 3, dans lequel le radiateur (58) est monté sur le carter de vilebrequin (33), et forme une chambre de générateur (56) qui loge un générateur (53) raccordé à une extrémité du vilebrequin (45), et qui est raccordée au passage de guidage d'air (101).

5. Bloc-moteur selon la revendication 4, dans lequel la chambre de générateur (56) est pourvue d'un guide d'air (102) qui guide l'écoulement d'air s'écoulant depuis le passage de guidage d'air (101) jusqu'à un faisceau de radiateur (95c) du radiateur (58).

6. Bloc-moteur selon l'une quelconque des revendications 1 à 5, comprenant en outre :
un filtre à air (39) qui est couplé au carter de transmission (31a) et aspire et purifie un air extérieur ; et
un composant de système d'admission (41) qui est disposé le long d'une paroi externe du passage de guidage d'air (101) et raccorde le filtre à air (39) à une culasse (35) formant la chemise d'eau (52b).
